# FASCICULE DE BREVET EUROPEEN

(11) **EP 4 313 684 B1**
(45) Date de publication et mention de la délivrance du brevet: **19.11.2025**
(21) Numéro de dépôt: 22720619.0
(22) Date de dépôt: 01.04.2022
(51) Int. Cl.: B60Q 1/38, G09F 9/305, F21S 41/143, F21S 41/151, F21S 41/25, F21W 103/20, F21W 103/60

(54) **MODULE OPTIQUE D'UN SYSTEME LUMINEUX D'UN VEHICULE AUTOMOBILE**
OPTISCHES MODUL EINER KRAFTFAHRZEUGBELEUCHTUNGSANLAGE
OPTICAL MODULE OF A MOTOR VEHICLE LIGHTING SYSTEM

(30) Priorité: 01.04.2021 FR 2103383
(43) Date de publication de la demande: 07.02.2024
(73) Titulaire: VALEO VISION, 93012 Bobigny Cedex (FR)
(72) Inventeur: COURCIER, Marine, 85774 Unterfoehring (DE); CVETKOVIC, Aleksandra, 85774 Unterfoehring (DE); MOISY, Eric, 85774 Unterfoehring (DE); NAMYSLO, Stefan, 85774 Unterfoehring (DE); ALBOU, Pierre, 93012 BOBIGNY Cedex (FR)
(74) Mandataire: Valeo Visibility
(86) Numéro de dépôt international: PCT/EP2022/058819
(87) Numéro de publication internationale: WO 2022/207937

(56) Documents cités:
- WO-A1-2012/068603
- WO-A1-2014/019912
- WO-A1-2021/052837
- JP-A- 2020 102 332
- US-A1- 2018 370 419
- US-A1- 2019 322 209
- US-B2- 9 611 996

## Description

L'invention concerne le domaine des systèmes lumineux des véhicules automobiles. Plus précisément, l'invention concerne un module optique d'un système lumineux d'un véhicule automobile.

Dans le domaine de l'éclairage et de la signalisation lumineuse automobile, il est connu de réaliser, en plus des fonctions classiques, des fonctions de projection au sol de logo ou de motifs lumineux, en champ proche du véhicule. Ce type de fonction peut par exemple intervenir dans le cadre d'assistance à la conduite, par exemple en réalisant un marquage au sol permettant de matérialiser une voie de circulation. Ce type de fonction peut également intervenir en support d'une fonction classique de signalisation, afin de prévenir un autre usager de la route d'un changement de trajectoire.

Afin de projeter le motif ou le logo lumineux au sol, une solution connue consiste à introduire des zones sombres dans un faisceau lumineux pixélisé émis par un système lumineux du véhicule automobile, le conducteur ou l'usager de la route visualisant ainsi le motif ou le logo par contraste entre zones sombres et zones éclairées. Cette solution requiert toutefois que le faisceau lumineux présente une résolution particulièrement importante et nécessite donc un nombre de sources lumineuses particulièrement élevé, ce qui rend le système lumineux couteux et complexe.

Une autre solution connue consiste à projeter de la lumière émise par une source lumineuse au travers d'un masque perforé d'une ouverture dont le contour correspond à celui du motif ou du logo que l'on souhaite projeter au sol. Si cette solution est bien moins cou-teuse que la précédente, elle n'est pas efficace puisqu'une grande partie de la lumière est bloquée ou absorbée par le masque.

Il existe ainsi un besoin pour un module optique permettant de projeter au sol un motif ou un logo lumineux, qui présente un cout raisonnable et qui soit efficace.

Le document WO 2021/052837 A divulgue un module optique pour projection au sol constituant une solution connue répondant à ce besoin.

La présente invention se place dans ce contexte et vise également à répondre à ce besoin,

L'invention est définie par la revendication 1. Elle a ainsi pour objet un module optique d'un système lumineux d'un véhicule automobile, comprenant :
a. au moins une source lumineuse contrôlable sélectivement,
b. un élément optique primaire comprenant au moins un organe optique primaire relié à un organe optique de sortie, ledit organe optique primaire comportant une face d'entrée de lumière en vis-à-vis de laquelle est disposée ladite source lumineuse et une face de jonction reliant ledit organe optique primaire à l'organe optique de sortie, l'élément optique primaire étant une pièce monobloc, et
c. un système optique de projection agencé pour projeter au sol, à partir de la lumière émise par ladite source lumineuse et collectée par ledit organe optique primaire, une image de ladite face de jonction de cet organe optique primaire, ledit organe optique primaire étant agencé pour que l'image de sa face de jonction projetée au sol par le système optique de projection soit entièrement délimitée par des bords sensiblement nets.

Dans l'invention, l'organe optique primaire est relié à l'organe optique de sortie de sortie par sa face de jonction, la lumière émise par la source lumineuse au travers de la face d'entrée de cet organe optique primaire et se propageant dans cet organe optique primaire pénétrant ainsi dans l'organe optique de sortie via cette face de jonction, qui forme ainsi une face de sortie fictive de l'organe optique primaire. Toute la lumière émise par la source lumineuse et collectée par cet organe optique primaire est ainsi exploitée pour former, au niveau de la face de jonction de cet organe, un motif défini au préalable et correspondant sensiblement à celui que l'on souhaite matérialiser au sol. L'élément optique primaire étant une pièce monobloc, cette lumière ne subit pas ou peu de déviation lors de son passage de l'organe optique primaire à l'organe optique de sortie. Il est à relever que cet organe de sortie permet, entre autres, de fournir un socle de maintien de l'organe optique primaire, et qui n'impacte pas les performances optiques du module, voire qui peut contribuer à les améliorer. Une image de ce motif peut ainsi être projeté au sol par le système optique de projection sans que sa netteté, définie sensiblement par l'organe optique primaire, ne soit impactée par l'organe optique de sortie. L'invention permet ainsi, pour un nombre d'éléments acceptable et donc un cout et une complexité raisonnables, de projeter au sol un motif ou un logo lumineux, en utilisant de façon optimale la lumière émise par une source lumineuse.

Dans la présente invention, le motif lumineux forme un logo, un pictogramme, un motif géométrique ou un ensemble de plusieurs logos, pictogrammes ou motifs géométriques ainsi que leur combinaison, comme par exemple un pictogramme associé à un ou plusieurs motifs géométriques. Avantageusement, on choisira un motif géométrique dont la forme est bien reconnue, comme un polygone quelconque ou régulier, des chevrons, des triangles ou des disques.

Dans l'invention, on entend par « bord sensiblement net d'une image projetée au sol » le fait que la variation de l'éclairement au sol, causé par cette projection, entre deux points situés de part et d'autre de ce bord suivant une direction sensiblement perpendiculaire au bord et séparés d'au moins 1 cm présente une pente, notamment en au moins un point, supérieure ou égale à 10 lux/cm.

Avantageusement, le module optique comprend :
a. une pluralité de sources lumineuses contrôlables sélectivement,
b. un élément optique primaire comprenant une pluralité d'organes optiques primaires reliés à un même organe optique de sortie, chaque organe optique primaire comportant une face d'entrée de lumière en vis-à-vis de laquelle est disposée l'une desdites sources lumineuses et une face de jonction reliant ledit organe optique primaire à l'organe optique de sortie, l'élément optique primaire étant une pièce monobloc, et
c. un système optique de projection agencé pour projeter au sol, à partir de la lumière émise par chacune des sources lumineuses et collectée par chaque organe optique primaire, une image de chacune des faces de jonction de ces organes optiques primaires, chaque organe optique primaire étant agencé pour que l'image de sa face de jonction projetée au sol par le système optique de projection soit entièrement délimitée par des bords sensiblement nets.

Dans un exemple de réalisation de l'invention, le système optique de projection est agencé pour projeter au sol, dans un champ proche du véhicule, les images des faces de jonction projetées au sol par le système optique de projection. On entend par champ proche un distance de projection inférieure à 10 mètres, notamment inférieure à 5 mètres et/ou une direction globale de projection formant un angle d'au moins 5° sous l'horizontal, notamment d'au moins 10° sous l'horizontal. Ces images peuvent ainsi participer à la réalisation d'une fonction d'indication d'une trajectoire empruntée par le véhicule, et notamment de type indicateur de direction ou de type feu de recul.

De préférence, chaque source lumineuse contrôlable sélectivement comporte une puce à semi-conducteur émettrice de lumière, notamment une diode électroluminescente. De préférence toujours, chaque source lumineuse contrôlable sélectivement est apte à émettre de la lumière de couleur blanche. En variante, chaque source lumineuse contrôlable sélectivement est apte à émettre de la lumière de couleur ambre. En variante encore, chaque source lumineuse contrôlable sélectivement est apte à émettre de la lumière dont la couleur est contrôlable.

Dans un mode de réalisation de l'invention, ledit, notamment chaque organe optique primaire comporte un guide de lumière primaire. Le cas échéant, la face d'entrée dudit, notamment de chaque, guide de lumière peut être reliée à la face de jonction dudit guide de lumière par une enveloppe telle que chaque point du contour de la face d'entrée est relié à un point du contour de la face de jonction par une droite. En d'autres termes, l'enveloppe du guide de lumière est une surface développable. Selon cette caractéristique, la lumière émise par une source lumineuse au travers de la face d'entrée d'un organe optique primaire se propage dans cet organe optique primaire par réflexion totale interne sur les parois du guide de lumière jusqu'à atteindre la face de jonction. Le fait que l'enveloppe soit une surface développable permet de former, au niveau de la face de jonction, un motif entièrement délimité par des bords sensiblement nets.

Avantageusement, la face d'entrée dudit, notamment de chaque, organe optique primaire est sensiblement rectangulaire. Le cas échéant, la face de jonction dudit organe optique primaire présente une forme sensiblement différente de celle de la face d'entrée dudit organe optique primaire. Selon cette caractéristique, chaque organe optique primaire peut être optimisé pour obtenir, au niveau de sa face de jonction, un motif de forme prédéterminée correspondant à la forme de cette face de jonction, pouvant être distinct d'un organe optique primaire à un autre, et qui puisse être projeté au sol de la façon la plus nette possible par le système optique de projection.

En variante, la face d'entrée dudit organe optique primaire peut présenter une forme et/ou une orientation adaptée au contour du motif formée au niveau de la face de jonction dudit organe optique primaire et agencée de sorte que la distribution de lumière dans ce contour soit sensiblement homogène. Par exemple, ladite face d'entrée peut présenter une forme de demi-disque ou de losange ou de rectangle déformé. De préférence, ladite face de jonction peut présenter un nombre de bords différent de celui de ladite face d'entrée et/ou des bords de dimensions distinctes de celles des bords de ladite face d'entrée et/ou des angles entre les bords distincts de ceux entre les bords de ladite face d'entrée. En particulier, la forme de ladite face de jonction pourra être distincte de toute forme susceptible d'être obtenue par homothétie de la forme de ladite face d'entrée. A titre d'exemple, ladite face de jonction pourra être sensiblement triangulaire, trapézoïdale, ou en forme de losange ou de pentagone.

Si on le souhaite, au moins deux faces d'entrées de deux organes optiques primaires présentent une orientation distincte l'une de l'autre.

Selon l'invention, le module comporte un cache opaque disposé en amont de l'organe optique de sortie et présentant au moins une ouverture, notamment une pluralité d'ouvertures, ledit, notamment chaque, organe optique primaire s'étendant au travers de ladite ouverture, notamment d'une desdites ouvertures. De préférence, chaque ouverture est agencée de sorte que son contour borde l'organe optique primaire la traversant. Ce cache permet de bloquer ou d'absorber des rayons de lumières parasites qui s'échapperaient des organes optiques primaires avant la face de jonction et qui pénètreraient dans l'organe optique de sortie, et donc d'éviter que ces rayons parasites soient projetés au sol par le système optique de projection, ce qui formerait des taches lumineuses non souhaitées.

Avantageusement, les organes optiques primaires sont agencés les uns au-dessus des autres. Par exemple, les organes optiques primaires sont agencés de sorte que l'image de la face de jonction d'un élément optique primaire supérieur soit projetée au sol, par le système optique de projection, en amont ou en aval de l'image de la face de jonction d'un élément optique primaire inférieur agencé en dessous de cet élément optique primaire supérieur. En variante, les organes optiques primaires peuvent être agencés les uns à côté des autres, le long d'un axe horizontal.

Selon un exemple de réalisation de l'invention, les organes optiques primaires sont reliés à l'organe optique de sortie de sorte que les faces de jonction, avec l'organe optique de sortie, d'au moins deux organes optiques primaires adjacents soient espacées l'une de l'autre. Selon cette caractéristique, il est ainsi possible de générer un espace entre les images des faces de jonction de ces deux organes optiques primaires adjacents, cet espace étant délimité au sol de façon nette par les bords de ces images.

Selon un autre exemple de réalisation de l'invention, cumulatif ou alternatif, au moins deux organes optiques primaires se rejoignent l'un l'autre en amont de leurs faces de jonctions, de sorte à être reliés ensemble à l'organe optique de sortie par une même face de jonction. Cette caractéristique permet de projeter au sol un motif particulièrement long, comme une longue ligne, ce qui n'est pas possible avec un seul organe optique primaire. Les dimensions de la face de jonction dans le cas d'un organe optique primaire seul pour réaliser un tel motif impliqueraient que les rayons émis par la source lumineuse dans la face d'entrée de cet organe et destinés à former les extrémités de cette ligne se présentent avec un angle tel qu'ils ne seraient pas projetés par le système optique de projection. A contrario, la combinaison de plusieurs organes optiques primaires pour obtenir une unique face de jonction permet d'obtenir un motif de grandes dimensions et homogène.

Avantageusement, l'organe optique de sortie présente une face de sortie sensiblement en forme de dôme lisse. Par exemple, l'organe optique de sortie peut être une portion de boule tronquée ou en variation une portion de cylindre tronqué. Cette caractéristique permet de doter l'organe optique de sortie d'une fonction de correction des aberrations géométriques introduites par le système optique de projection lors de la projection au sol desdites images des faces de jonction.

De préférence, les indices de réfraction respectifs des organes optiques primaires et de l'organe optique de sortie sont sensiblement identiques. Par exemple, les organes optiques primaires et l'organe optique de sortie sont fabriqués dans un même matériau, et sont notamment issus d'un même polymère. Par « même matériau », on entend signifier que les organes optiques primaires et l'organe optique de sortie sont réalisés dans des matériaux au moins issus d'un même polymère de base, par exemple du polycarbonate (ou PC) ou du PMMA. Toutefois, ces matériaux peuvent avoir des charges différentes. De préférence, les organes optiques primaires et l'organe optique de sortie peuvent être issus d'un unique moule pour former l'élément optique primaire, cet élément optique primaire étant ainsi une pièce unique.

En variante, l'un ou plusieurs, voire tous les organes optiques primaires et l'organe optique de sortie peuvent être issus de moules distincts en étant ensuite assemblés pour former l'élément optique primaire. Le cas échéant, lesdits organes optiques primaires issus de moules distincts de celui de l'organe optique de sortie peuvent être collés à l'organe optique de sortie au moyen d'une colle d'indice de réfraction sensiblement identique à ceux de ces organes optiques primaires et de l'organe optique de sortie.

Par exemple, l'organe optique de sortie peut comporter une encoche formée dans une face amont opposée à la face de sortie, au moins un organe optique primaire présentant une embase destinée à être insérée dans ladite encoche de sorte qu'une face aval de l'embase soit en vis-à-vis de l'encoche et forme la face de jonction de cet organe optique primaire. Dans cet exemple, il est ainsi possible qu'un des organes optiques primaires soit fabriqué indépendamment de l'organe optique de sortie, tandis qu'un autre organe optique primaire soit réalisé avec l'organe optique de sortie, l'encoche permettant d'assurer que les faces de jonction de ces organes optiques primaires soient coplanaires.

Selon un autre exemple, l'ensemble des organes optiques primaires forme une pièce unique munie d'une embase à laquelle sont reliés les organes optiques primaires via leurs faces de jonction, cette pièce unique étant assemblée avec une pièce optique de sortie de sorte qu'une face aval de l'embase soit en vis-à-vis d'une face amont de la pièce optique de sortie. Le cas échéant, l'embase et la pièce optique de sortie forment ensemble l'organe optique de sortie.

Si on le souhaite, le ou lesdits organes optiques primaires issus de moules distincts de celui de l'organe optique de sortie peuvent comporter des pattes de fixation et de positionnement destinées à coopérer avec l'organe optique de sortie, par exemple avec des rebords de l'organe optique de sortie ou avec des pattes de fixation complémentaire de l'organe optique de sortie. Ces caractéristiques permettent d'assurer la précision du positionnement relatif de l'organe optique de sortie avec ce ou ces organes optiques primaires.

Avantageusement, le système optique de projection présente une surface focale passant sensiblement par la face de jonction dudit organe optique primaire avec l'organe optique de sortie, notamment par les faces de jonction desdits organes optiques primaires avec l'organe optique de sortie. Par exemple, ladite surface focale peut être un plan ou une surface courbée située sensiblement au niveau du plan de jonction entre les surfaces de jonction et l'organe optique de sortie.

Par exemple, le système optique de projection comporte au moins une lentille et/ou un réflecteur et/ou une combinaison d'au moins une lentille et d'au moins un réflecteur. De préférence, le système optique de projection pourra comporter une unique lentille de projection dont la surface focale passe sensiblement par les surfaces de jonction des organes optiques primaires avec l'organe optique de sortie. Il est à noter que le terme « sensiblement » s'entend pour un décalage de quelques millimètres entre la surface focale et les surfaces de jonction, qui permettrait de prendre en compte une défocalisation introduite par la face de sortie de l'organe optique de sortie. En variante, le système optique de projection pourra comporter un miroir sensiblement plan agencé pour former des images virtuelles des surfaces de jonction d'un côté de ce miroir sensiblement plan et une lentille de projection située de l'autre côté de ce miroir sensiblement plan et dont la surface focale passe sensiblement par ces images virtuelles. Ce type de système optique de projection permet de réduire sensiblement l'encombrement du module optique.

L'invention a également pour objet un système lumineux d'un véhicule automobile, comprenant un module optique selon l'invention, et une unité de contrôle des sources lumineuses dudit module optique.

Par exemple, ledit système lumineux pourra comporter un dispositif lumineux de type feu arrière d'un véhicule automobile, et/ou projecteur avant de véhicule automobile, et/ou un dispositif lumineux agencé dans un pare-chocs d'un véhicule automobile et/ou dans un rétroviseur d'un véhicule automobile, le module optique étant agencé dans ce dispositif lumineux.

Avantageusement, l'unité de contrôle est apte à contrôler sélectivement chacune des sources lumineuses dudit module optique en fonction d'une instruction reçue d'un calculateur du véhicule automobile.

Selon un exemple, le système lumineux pourra comporter un module optique supplémentaire comprenant au moins une source lumineuse supplémentaire et apte à émettre un faisceau lumineux de signalisation, notamment réglementaire, et l'unité de contrôle pourra être agencée, en fonction d'une instruction reçue d'un calculateur du véhicule automobile, pour contrôler de façon synchronisée ladite source lumineuse supplémentaire du module optique supplémentaire et lesdites sources lumineuses du module optique.

Par exemple, le module optique supplémentaire pourra être apte à émettre un faisceau lumineux de type indicateur de direction réglementaire et l'unité de contrôle pourra être agencée, en fonction d'une instruction reçue d'un calculateur du véhicule automobile, pour contrôler l'émission dudit faisceau lumineux par la source lumineuse supplémentaire de façon intermittente et pour contrôler l'émission de lumière par chacun des sources lumineuses du module optique de façon simultanée avec l'émission dudit faisceau lumineux.

Selon un autre exemple, le module optique supplémentaire pourra comporter plusieurs sources lumineuses supplémentaires et pourra être apte à réaliser une fonction de type indicateur de direction défilant réglementaire et l'unité de contrôle pourra être agencée, en fonction d'une instruction reçue d'un calculateur du véhicule automobile, pour contrôler l'émission séquentielle et/ou progressive de faisceaux lumineux par les sources lumineuses supplémentaires et pour contrôler l'émission de lumière par chacun des sources lumineuses de façon séquentielle et/ou progressive et de manière synchronisée avec l'émission séquentielle et/ou progressive desdits faisceaux lumineux.

La présente invention est maintenant décrite à l'aide d'exemples uniquement illustratifs et nullement limitatifs de la portée de l'invention, et à partir des dessins annexés, dessins sur lesquels les différentes figures représentent :
[Fig. 1] représente, schématiquement et partiellement, une vue en coupe d'un module optique selon un mode de réalisation de l'invention ;
[Fig. 2] représente, schématiquement et partiellement, une vue en perspective de l'élément optique primaire du module de la [Fig. 1] ;
[Fig. 3] représente, schématiquement et partiellement, un système lumineux d'un véhicule automobile selon un mode de réalisation de l'invention et incorporant le module optique de la [Fig. 1] ; et
[Fig. 4] représente, schématiquement et partiellement, une vue en coupe d'un module optique selon un autre mode de réalisation de l'invention.

Dans la description qui suit, les éléments identiques, par structure ou par fonction, apparaissant sur différentes figures conservent, sauf précision contraire, les mêmes références.

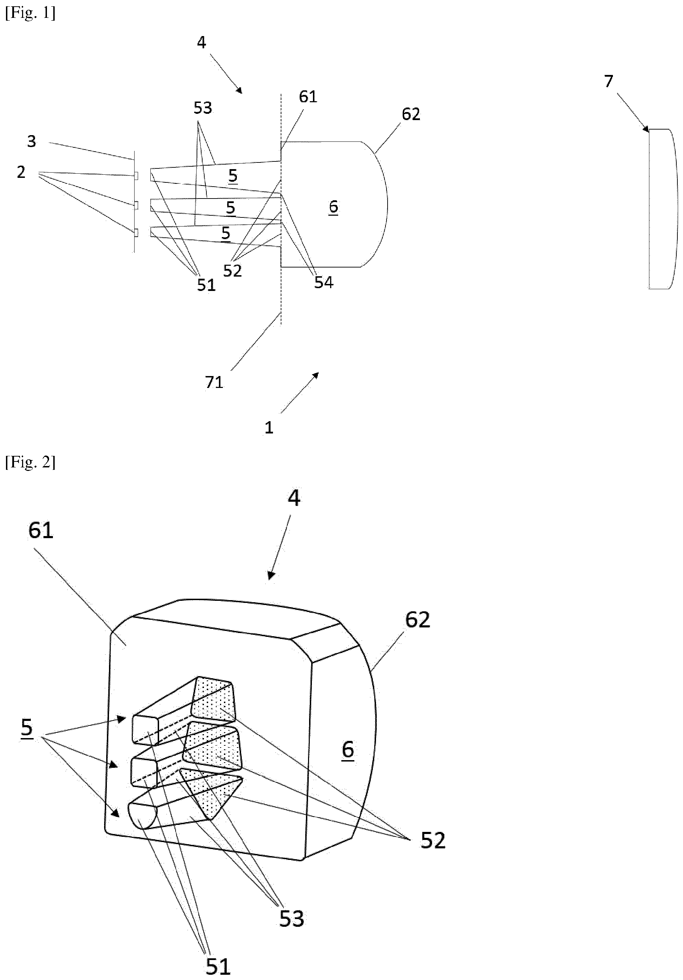

On a représenté en [Fig. 1] un module optique 1 d'un système lumineux d'un véhicule automobile selon un premier mode de réalisation de l'invention.

Le module optique 1 comporte une pluralité de diodes électroluminescentes 2 montées sur une même carte de circuit imprimé 3. Dans l'exemple décrit, le module optique 1 comporte trois LEDs 2 pouvant chacune être contrôlée indépendamment des autres pour émettre de la lumière de couleur blanche.

Le module optique 1 comporte un élément optique primaire 4 agencé en aval des diodes électroluminescentes 2. Cet élément optique primaire 4 sera décrit en liaison avec la [Fig. 2] qui montre cet élément 4 dans une vue en perspective arrière.

L'élément optique primaire 4 comporte une pluralité d'organes optiques primaires 5 et un organe optique de sortie 6 auquel sont reliés ces organes optiques primaires 5. Dans l'exemple décrit, l'élément optique primaire 4 comporte trois organes optiques primaires 5, chacun réalisé sous la forme d'un guide de lumière. Les organes optiques primaires 5 sont agencés les uns au-dessus des autres.

Chaque guide de lumière 5 comporte une face d'entrée 51, en vis-à-vis de laquelle est disposée l'une des LEDs 2, la lumière susceptible d'être émise par cette LED 2 pénétrant ainsi dans le guide de lumière 5 par cette face d'entrée 51.

Chaque guide de lumière 5 est relié à l'organe optique de sortie 6 par une face de jonction 52, opposée à la face d'entrée 51, et située au niveau d'une paroi amont 61 de l'organe optique de sortie 6.

Pour chaque guide de lumière 5, la face d'entrée 51 est reliée à la face de jonction 52 par une enveloppe 53. Cette enveloppe 53 est une surface développable, de sorte que chaque point du contour de la face d'entrée 51 est reliée, via l'enveloppe 53, à un point du contour de la face de jonction 52 par une droite. La lumière susceptible d'être émise par la LED 2 située en vis-à-vis de la face d'entrée 51 est ainsi couplée au guide de lumière 5, lorsqu'elle pénètre dans ce guide de lumière 5 par cette face d'entrée 51, et se propage par des réflexions totales internes successives contre l'enveloppe 53 jusqu'à atteindre la face de jonction 52, via laquelle elle est découplée du guide de lumière 5 et pénètre dans l'organe optique de sortie 6. La face de jonction 52 forme ainsi une face de sortie fictive du guide de lumière 5.

Comme on peut le voir en [Fig. 2], les faces d'entrées 51 des guides de lumière 5 peuvent être distinctes les unes des autres. Dans l'exemple décrit, la face d'entrée 51 du guide de lumière inférieur présente une forme semi-circulaire, tandis que les faces d'entrées 51 des guides de lumière central et supérieur sont rectangulaires. On pourrait concevoir d'autres formes que celles décrites, et notamment des formes de losange ou de rectangle déformé, sans sortir du cadre de la présente invention. De même, on pourrait concevoir que toutes les formes des faces d'entrée 51 soient distinctes les unes des autres ou encore que les dimensions d'une partie seulement ou de toutes les faces d'entrées 51 soient distinctes les unes des autres ou encore que les orientations d'une partie seulement ou de toutes les faces d'entrées 51 soient distinctes les unes des autres, sans sortir du cadre de la présente invention. Comme il va être décrit ultérieurement, le choix de la forme de la face d'entrée 51 d'un guide de lumière 5 est principalement lié à la forme de la face de jonction 52 de ce guide 5 et à la distribution de lumière souhaitée au niveau de cette face de jonction 52.

De même, les faces de jonction 52 des guides de lumière 5 peuvent être distinctes les unes des autres et la face de jonction 52 de chaque guide de lumière 5 est distincte de la face d'entrée 51 de ce guide de lumière 5. La face de jonction 52 d'un guide de lumière 5 définit ainsi, grâce à son contour, un motif dont la forme est prédéterminée et propre à ce guide de lumière 5. La forme de la face d'entrée 51 et l'enveloppe 53 de chaque guide de lumière 5 permet ainsi d'exploiter toute la lumière émise par une LED 2 au travers de la face d'entrée 51 pour obtenir au niveau de la face de jonction 52 un motif entièrement délimité par des bords sensiblement nets. De même, la forme de la face d'entrée 51 et l'enveloppe 53 permettent d'obtenir une distribution de lumière homogène à l'intérieur de ce motif, au niveau de la face de jonction 52.

Dans l'exemple décrit, la face de jonction 52 du guide de lumière inférieur présente une forme triangulaire, tandis que les faces de jonction 52 des guides de lumière central et supérieur sont trapézoïdales, les dimensions de la face de jonction 52 du guide supérieur étant inférieures à celles de la face de jonction 52 du guide central. On notera que la forme semi-circulaire de la face d'entrée 51 du guide inférieur est particulièrement adaptée pour obtenir une distribution de lumière homogène au niveau de la face de jonction 52 de ce guide inférieur, et que les formes rectangulaires des faces d'entrée 51 des guides de lumière central et supérieur sont particulièrement adaptées pour obtenir une distribution de lumière homogène au niveau des faces de jonction 52 de ces guides de lumière central et supérieur.

Par ailleurs, les guides de lumière 5 sont agencés de sorte que deux faces de jonction 52 adjacentes soient espacées d'un espace 54.

L'élément optique primaire 4 est une pièce monobloc, les guides de lumière 5 et l'organe optique de sortie 6 étant fabriqués dans un même matériau, à savoir du polycarbonate ou PC. Dans l'exemple décrit, l'élément optique primaire 4 est une pièce issue d'un moule unique. En d'autres termes, l'indice de réfraction des guides de lumière 5 et de l'organe optique de sortie 6 est identique, et il n'existe aucun dioptre au niveau des faces de jonction 52, de sorte que la lumière pénétrant depuis les guides de lumière 5 dans l'organe optique de sortie 6 ne subit aucune déviation au niveau des faces de jonction 52.

L'organe optique de sortie 6 présente une face de sortie 62, opposée à la face amont 61 en forme de dôme lisse. Plus précisément, cette face de sortie 62 peut être partiellement sphérique, l'organe optique de sortie 6 présentant ainsi une forme de boule tronquée. La face de sortie 62 est notamment centrée sur la face de jonction 52 du guide de lumière 5 central. De ce fait, la lumière issue des faces de jonction 52 ne subit sensiblement aucune déviation lors de sa sortie de l'élément optique primaire 4 via cette face de sortie 62. L'organe optique de sortie 6 forme ainsi un support de montage des guides de lumière 5, et il est possible d'agencer des éléments de fixation de l'élément optique primaire 4 sur cet organe optique de sortie 6.

Le module optique 1 comporte un système optique de projection 7. Dans l'exemple de la [Fig. 1], le système optique de projection 7 est une lentille de projection 7 présentant un plan focal 71 passant sensiblement par les surfaces de jonction 52 des guides de lumière 5.

Cette lentille de projection 7 est ainsi agencée pour projeter au sol, dans un champ proche, des images des faces de jonction 52. Les motifs formés au niveau des faces de jonction 52 étant entièrement délimités par des bords nets, du fait des guides de lumière 5, et le plan focal 71 passant par ces faces de jonction 52, ces images projetées au sol sont donc elles-mêmes entièrement délimitées par des bords nets, correspondant aux bords de ces faces de jonction 52, après inversion par la lentille de projection 7. Il est à noter qu'une déformation est introduite lors de la projection des images par la lentille de projection 7, dans la mesure où la projection n'est pas réalisée perpendiculairement au sol. Toutefois, dans le cas d'une projection sur un plan orthogonal à l'axe optique du module optique, les images projetées correspondent bien aux faces de jonction 52.

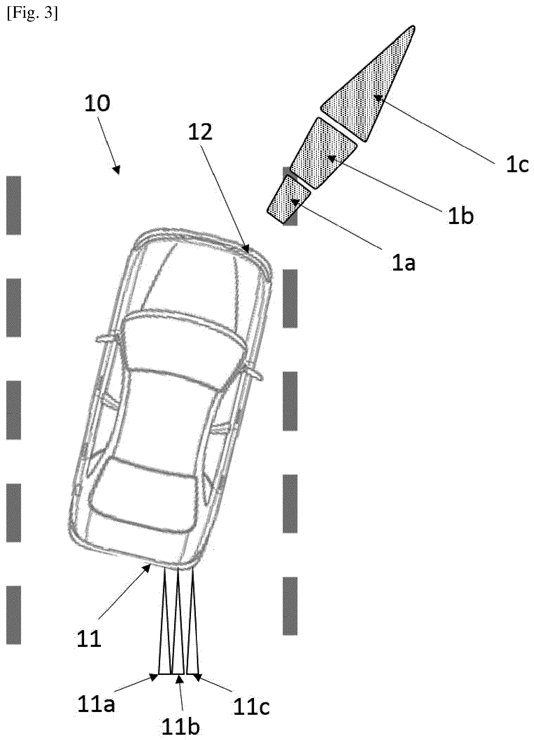

La [Fig. 3] décrit un système lumineux 10 d'un véhicule automobile selon un exemple de réalisation de l'invention.

Le système lumineux 10 comporte un feu arrière 11 et un projecteur avant 12. Le feu arrière 11 comporte une pluralité de sources lumineuses, non représentées, et pouvant être contrôlées indépendamment les unes des autres. Le module optique 1 de la [Fig. 1] est agencé dans le projecteur avant 12.

Le système lumineux 10 comporte une unité de contrôle (non représentée) recevant des instructions d'un calculateur du véhicule automobile pour la réalisation de fonctions lumineuses, et contrôlant les sources lumineuses du feu arrière 11 et les LEDs 2 du module optique 1 en fonction de ces instructions.

A la réception d'une instruction d'émission d'une fonction de type indicateur de direction défilant, par exemple générée par le calculateur lors d'un changement de voie du véhicule automobile, l'unité de contrôle commande de façon cyclique les sources lumineuses du feu arrière 11, chaque cycle consistant en l'émission progressive de trois faisceaux lumineux 11a, 11b et 11c, depuis l'intérieur vers l'extérieur du véhicule automobile, suivie d'une extinction de ces trois faisceaux.

Parallèlement, pour chaque cycle, l'unité de contrôle active la LED 2 inférieure simultanément avec l'émission du faisceau lumineux 11a, le module optique 1 projetant ainsi au sol, en champ proche du véhicule, l'image 1a de la face de jonction 52 du guide de lumière 5 inférieur. L'unité de contrôle active ensuite la LED 2 centrale simultanément avec l'émission du faisceau lumineux 11b, le module optique 1 projetant ainsi au sol, en champ proche du véhicule, l'image 1b de la face de jonction 52 du guide de lumière 5 central, la LED 2 inférieure restant activée. L'unité de contrôle active ensuite la LED 2 supérieure simultanément avec l'émission du faisceau lumineux 11c, le module optique 1 projetant ainsi au sol, en champ proche du véhicule, l'image 1c de la face de jonction 52 du guide de lumière 5 supérieur, les LEDs 2 inférieure et centrale restant activées. Enfin, l'unité de contrôle désactive toutes les LEDs 2, simultanément avec l'extinction des faisceaux lumineux 11a, 11b et 11c.

On comprend ainsi que le module optique 1 réalise ainsi une fonction d'indicateur de direction complémentaire à la fonction d'indicateur de direction défilant réalisée par le feu arrière 11. Les images 1a, 1b et 1c étant projetées au sol, en champ proche du véhicule, elles sont ainsi susceptibles d'être aisément perçues par un usager de la route circulant au droit du véhicule automobile. L'agencement des guides de lumière 5 les uns au-dessus des autres permet de projeter ces images 1a, 1b et 1c les unes en aval des autres, les espaces 54 entre les faces de jonction 52 permettant de générer des espaces entre ces images pour renforcer encore leur netteté.

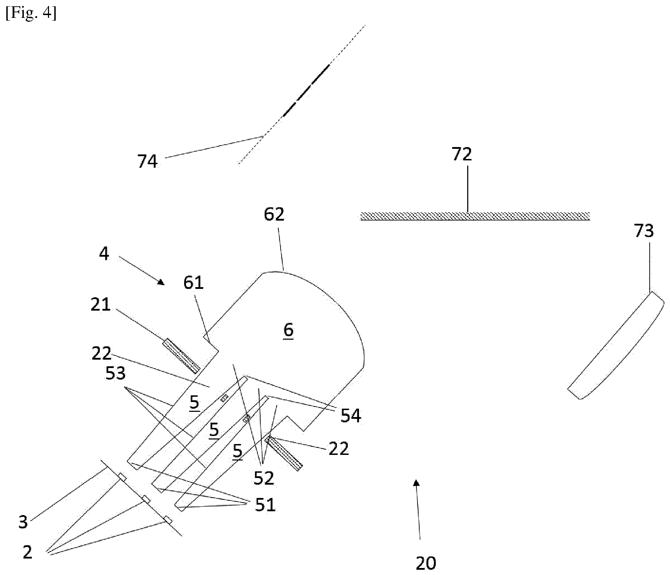

On a représenté en [Fig. 4] un module optique 20 d'un système lumineux d'un véhicule automobile selon un deuxième mode de réalisation de l'invention.

Dans cet exemple, le module optique 20 comporte, comme dans l'exemple de la [Fig. 1], trois LEDs 2 et un élément optique primaire 4 agencé en aval des diodes électroluminescentes 2, l'élément optique primaire 4 étant conforme à l'exemple de la [Fig. 1] et de la [Fig. 3].

Le module optique 20 comporte également un cache opaque 21 disposé en amont de la face amont 61 de l'organe optique de sortie 6. Ce cache 21 comporte une pluralité d'ouvertures 22, chaque guide de lumière 5 passant au travers d'une de ces ouvertures 22. Ce cache 21 permet ainsi de bloquer des rayons de lumière parasites qui s'échapperaient des guides de lumière 5 avant d'atteindre les faces de jonction 52, de sorte à améliorer la netteté des bords des motifs formés au niveau de ces faces de jonction 52.

Par ailleurs, le module optique comporte un système optique de projection 7 comportant d'une part un miroir plan 72 et d'autre part une lentille de projection 73.

Le miroir plan 72 est agencé en aval de la face de sortie 62 de l'organe optique de sortie 6 et permet de former des images virtuelles des surfaces de jonction 52 à l'arrière de ce miroir plan 72. La lentille de projection 73 est située en aval du miroir plan 72 et présente un plan focal 74 passant sensiblement par la position de ces images virtuelles, de sorte qu'elle puisse projeter au sol des images de ces images virtuelles.

La description qui précède explique clairement comment l'invention permet d'atteindre les objectifs qu'elle s'est fixée, à savoir proposer un module optique permettant de projeter au sol un motif ou un logo lumineux, qui présente un cout raisonnable et qui soit efficace, ce module optique comprenant un élément optique primaire monobloc combinant des organes optiques primaires capables de former des motifs nets et un organe optique de sortie permettant de maintenir ces organes optiques primaires sans impacter les performances optiques du module.

En tout état de cause, l'invention ne saurait se limiter aux modes de réalisation spécifiquement décrits dans ce document, et s'étend en particulier à tous moyens équivalents et à toute combinaison techniquement opérante de ces moyens. On pourra notamment envisager d'employer d'autres types de sources lumineuses que celles décrites, et notamment des sources lumineuses apte à émettre de la lumière de couleur autre que blanche ou de la lumière dont la couleur puisse être contrôlée. On pourra également envisager d'autres formes pour les faces de jonction que celles décrites. On pourra également envisager d'autres fonctions lumineuses que celles décrites, et notamment d'autres fonctions d'indication d'un changement de trajectoire d'un véhicule automobile, comme indicateur de recul ou un indicateur de changement de voie, des fonctions d'assistance à la conduite ou encore des fonctions de communication entre véhicules.

## Revendications

1. Module optique (1, 20) d'un système lumineux (10) d'un véhicule automobile, comprenant :
a. au moins une source lumineuse (2) contrôlable sélectivement,
b. un élément optique primaire (4) comprenant au moins un organe optique primaire (5) relié à un organe optique de sortie (6), ledit organe optique primaire comportant une face d'entrée de lumière (51) en vis-à-vis de laquelle est disposée ladite source lumineuse et une face de jonction (52) reliant ledit organe optique primaire à l'organe optique de sortie, l'élément optique primaire étant une pièce monobloc, et
c. un système optique de projection (7) agencé pour projeter au sol, à partir de la lumière émise par ladite source lumineuse et collectée par ledit organe optique primaire, une image (1a, 1b, 1c) de ladite face de jonction de cet organe optique primaire, ledit organe optique primaire étant agencé pour que l'image de sa face de jonction projetée au sol par le système optique de projection soit entièrement délimitée par des bords sensiblement nets,
**caractérisé en ce que** le module comporte un cache opaque (21) disposé en amont de l'organe optique de sortie (6), le cache opaque (21) présentant au moins une ouverture (22), ledit organe optique primaire (5) s'étendant au travers de ladite ouverture.

2. Module optique (1, 20) selon la revendication précédente, dans lequel ledit organe optique primaire (5) comporte un guide de lumière primaire, la face d'entrée (51) dudit guide de lumière étant reliée à la face de jonction (52) dudit guide de lumière par une enveloppe (53) telle que chaque point du contour de la face d'entrée est relié à un point du contour de la face de jonction par une droite.

3. Module optique (1, 20) selon l'une des revendications précédentes, dans lequel la face d'entrée (51) dudit organe optique primaire (5) est sensiblement rectangulaire, et dans lequel la face de jonction (52) dudit organe optique primaire présente une forme sensiblement différente de celle de la face d'entrée dudit organe optique primaire.

4. Module optique (1, 20) selon l'une des revendications précédentes, comprenant :
a. une pluralité de sources lumineuses (2) contrôlables sélectivement,
b. l'élément optique primaire (4) comprenant une pluralité d'organes optiques primaires (5) reliés à un même organe optique de sortie (6), chaque organe optique primaire comportant une face d'entrée de lumière (51) en vis-à-vis de laquelle est disposée l'une desdites sources lumineuses et une face de jonction (52) reliant ledit organe optique primaire à l'organe optique de sortie, l'élément optique primaire étant une pièce monobloc, et
c. le système optique de projection (7) étant agencé pour projeter au sol, à partir de la lumière émise par chacune des sources lumineuses et collectée par chaque organe optique primaire, une image (1a, 1b, 1c) de chacune des faces de jonction de ces organes optiques primaires, chaque organe optique primaire étant agencé pour que l'image de sa face de jonction projetée au sol par le système optique de projection soit entièrement délimitée par des bords sensiblement nets.

5. Module optique (1, 20) selon la revendication précédente, dans lequel les organes optiques primaires (5) sont agencés les uns au-dessus des autres.

6. Module optique (1, 20) selon l'une des revendications 4ou 5, dans lequel les organes optiques primaires (5) sont reliés à l'organe optique de sortie (6) de sorte que les faces de jonction (52), avec l'organe optique de sortie, de deux organes optiques primaires adjacents soient espacées l'une de l'autre.

7. Module optique (1, 20) selon l'une des revendications 4 à 6, dans lequel au moins deux organes optiques primaires (5) se rejoignent l'un l'autre en amont de leurs faces de jonctions (52), de sorte à être reliés ensemble à l'organe optique de sortie (6) par une même face de jonction.

8. Module optique (1, 20) selon l'une des revendications précédentes, dans lequel l'organe optique de sortie (6) présente une face de sortie (62) sensiblement en forme de dôme lisse.

9. Module optique (1, 20) selon l'une des revendications précédentes, dans lequel le système optique de projection (7) présente une surface focale (71) passant sensiblement par la face de jonction (52) dudit organe optique primaire (5) avec l'organe optique de sortie (6).

10. Module optique (1, 20) selon la revendication précédente, dans lequel le système optique de projection (7) comporte au moins une lentille (7, 73) et/ou un réflecteur (72) et/ou une combinaison d'au moins une lentille et d'au moins un réflecteur.

11. Système lumineux (10) d'un véhicule automobile, comprenant un module optique (1, 20) selon l'une des revendications précédentes, et une unité de contrôle des sources lumineuses dudit module optique.

## Patentansprüche

1. Optisches Modul (1, 20) eines Beleuchtungssystems (10) eines Kraftfahrzeugs, umfassend:
a. mindestens eine selektiv steuerbare Lichtquelle (2),
b. ein optisches Primärelement (4), umfassend mindestens ein optisches Primärorgan (5), das mit einem optischen Ausgangsorgan (6) verbunden ist, wobei das optische Primärorgan eine Lichteintrittsfläche (51) aufweist, der die Lichtquelle gegenüberliegt, und eine Verbindungsfläche (52), die das optische Primärorgan mit dem optischen Ausgangsorgan verbindet, wobei das optische Primärelement ein einstückiges Teil ist, und
c. ein optisches Projektionssystem (7), das dazu ausgelegt ist, von dem von der Lichtquelle emittierten und von dem optischen Primärorgan gesammelten Licht ein Bild (1a, 1b, 1c) der Verbindungsfläche dieses optischen Primärorgan auf den Boden zu projizieren, wobei das optische Primärorgan dazu ausgelegt ist, dass das von dem optischen Projektionssystem auf den Boden projizierte Bild seiner Verbindungsfläche vollständig durch im Wesentlichen scharfe Kanten begrenzt ist,
**dadurch gekennzeichnet, dass** das Modul eine opake Abdeckung (21) aufweist, die stromaufwärts des optischen Ausgangsorgans (6) angeordnet ist, wobei die opake Abdeckung (21) mindestens eine Öffnung (22) aufweist, wobei sich das optische Primärorgan (5) durch die Öffnung erstreckt.

2. Optisches Modul (1, 20) nach dem vorhergehenden Anspruch, wobei das optische Primärorgan (5) einen primären Lichtleiter aufweist, wobei die Eintrittsfläche (51) des Lichtleiters mit der Verbindungsfläche (52) des Lichtleiters durch eine Hülle (53) verbunden ist, so dass jeder Punkt des Umrisses der Eintrittsfläche mit einem Punkt des Umrisses der Verbindungsfläche durch eine gerade Linie verbunden ist.

3. Optisches Modul (1, 20) nach einem der vorhergehenden Ansprüche, wobei die Eintrittsfläche (51) des optischen Primärorgan (5) im Wesentlichen rechteckig ist, und wobei die Verbindungsfläche (52) des optischen Primärorgan eine Form aufweist, die sich im Wesentlichen von der der Eintrittsfläche des optischen Primärorgan unterscheidet.

4. Optisches Modul (1, 20) nach einem der vorhergehenden Ansprüche, umfassend:
a. eine Vielzahl von selektiv steuerbaren Lichtquellen (2),
b. das optische Primärelement (4), umfassend eine Vielzahl von optischen Primärorganen (5), die mit einem selben optischen Ausgangsorgan (6) verbunden sind, wobei jedes optische Primärorgan eine Lichteintrittsfläche (51) aufweist, der eine der Lichtquellen gegenüberliegt, und eine Verbindungsfläche (52), die das optische Primärorgan mit dem optischen Ausgangsorgan verbindet, wobei das optische Primärelement ein einstückiges Teil ist, und
c. das optische Projektionssystem (7), das dazu ausgelegt ist, von dem von jeder der Lichtquellen emittierten und von jedem optischen Primärorgan gesammelten Licht ein Bild (1a, 1b, 1c) jeder der Verbindungsflächen dieser optischen Primärorgane auf den Boden zu projizieren, wobei jedes optische Primärorgan dazu ausgelegt ist, dass das von dem optischen Projektionssystem auf den Boden projizierte Bild seiner Verbindungsfläche vollständig durch im Wesentlichen scharfe Kanten begrenzt ist.

5. Optisches Modul (1, 20) nach dem vorhergehenden Anspruch, wobei die optischen Primärorgane (5) übereinander angeordnet sind.

6. Optisches Modul (1, 20) nach einem der Ansprüche 4 oder 5, wobei die optischen Primärorgane (5) mit dem optischen Ausgangsorgan (6) so verbunden sind, dass die Verbindungsflächen (52) mit dem optischen Ausgangsorgan von zwei benachbarten optischen Primärorganen voneinander beabstandet sind.

7. Optisches Modul (1, 20) nach einem der Ansprüche 4 bis 6, wobei mindestens zwei optische Primärorgane (5) stromaufwärts ihrer Verbindungsflächen (52) zusammenlaufen, um gemeinsam über eine selbe Verbindungsfläche mit dem optischen Ausgangsorgan (6) verbunden zu sein.

8. Optisches Modul (1, 20) nach einem der vorhergehenden Ansprüche, wobei das optische Ausgangsorgan (6) eine Ausgangsfläche (62) aufweist, die im Wesentlichen glatt und kuppelförmig ist.

9. Optisches Modul (1, 20) nach einem der vorhergehenden Ansprüche, wobei das optische Projektionssystem (7) eine Brennfläche (71) aufweist, die im Wesentlichen durch die Verbindungsfläche (52) des optischen Primärorgan (5) mit dem optischen Ausgangsorgan (6) verläuft.

10. Optisches Modul (1, 20) nach dem vorhergehenden Anspruch, wobei das optische Projektionssystem (7) mindestens eine Linse (7, 73) und/oder einen Reflektor (72) und/oder eine Kombination aus mindestens einer Linse und mindestens einem Reflektor aufweist.

11. Beleuchtungssystem (10) eines Kraftfahrzeugs, umfassend ein optisches Modul (1, 20) nach einem der vorhergehenden Ansprüche und eine Steuereinheit für die Lichtquellen des optischen Moduls.

## Claims

1. Optical module (1, 20) of a luminous system (10) for a motor vehicle, comprising:
a. at least one selectively controllable light source (2),
b. a primary optical element (4) comprising at least one primary optical component (5) connected to an output optical component (6), said primary optical element having a light entry face (51) opposite which said light source is disposed and a junction face (52) connecting said primary optical element to the output optical element, the primary optical element being a single-piece component, and
c. a projection optical system (7) arranged to project onto the ground, from the light emitted by said light source and collected by said primary optical element, an image (1a, 1b, 1c) of said junction face of this primary optical element, said primary optical element being arranged so that the image of its junction face projected onto the ground by the optical projection system is entirely delimited by substantially sharp edges,
**characterized in that** the module comprises an opaque cover (21) disposed upstream of the optical output element (6), the opaque cover (21) having at least one opening (22), said primary optical element (5) extending through said opening.

2. Optical module (1, 20) according to the previous claim, wherein said primary optical element (5) comprises a primary light guide, the input face (51) of said light guide being connected to the junction face (52) of said light guide by an envelope (53) such that each point on the contour of the input face is connected to a point on the contour of the junction face by a straight line.

3. An optical module (1, 20) according to one of the preceding claims, wherein the input face (51) of said primary optical member (5) is substantially rectangular, and wherein the junction face (52) of said primary optical member has a shape substantially different from that of the input face of said primary optical member.

4. An optical module (1, 20) according to any one of the preceding claims, comprising:
a. a plurality of selectively controllable luminous sources (2),
b. the primary optical element (4) comprising a plurality of primary optical elements (5) connected to a single output optical element (6), each primary optical element having a light input face (51) opposite which one of said light sources is disposed and a junction face (52) connecting said primary optical element to the output optical element, the primary optical element being a single piece, and
c. the optical projection system (7) arranged to project onto the ground, from the light emitted by each of the light sources and collected by each primary optical element, an image (1a, 1b, 1c) of each of the junction faces of these primary optical elements, each primary optical element being arranged so that the image of its junction face projected onto the ground by the optical projection system is entirely delimited by substantially sharp edges.

5. Optical module (1, 20) according to the previous claim, in which the primary optical elements (5) are arranged one above the other.

6. Optical module (1, 20) according to one of claims 4 or 5, wherein the primary optical elements (5) are connected to the output optical element (6) such that the junction faces (52) with the output optical element of two adjacent primary optical elements are spaced apart from each other.

7. An optical module (1, 20) according to one of claims 4 to 6, wherein at least two primary optical elements (5) join each other upstream of their junction faces (52) so as to be connected together to the output optical element (6) by a single junction face.

8. An optical module (1, 20) according to one of the preceding claims, wherein the output optical element (6) has an output face (62) that is substantially smooth and dome-shaped.

9. An optical module (1, 20) according to one of the preceding claims, wherein the projection optical system (7) has a focal surface (71) passing substantially through the junction face (52) of said primary optical element (5) with the output optical element (6).

10. An optical module (1, 20) according to the preceding claim, wherein the projection optical system (7) comprises at least one lens (7, 73) and/or a reflector (72) and/or a combination of at least one lens and at least one reflector.

11. Luminous system (10) for a motor vehicle, comprising an optical module (1, 20) according to one of the preceding claims, and a control unit for the light sources of said optical module.
